# EUROPÄISCHE PATENTANMELDUNG

(11) **EP 4 815 377 A1**
(43) Veröffentlichungstag der Anmeldung: **30.09.2026**
(21) Anmeldenummer: 26166795.0
(22) Anmeldetag: 23.03.2026
(51) Int. Cl.: H04L 12/28, G07C 9/00, H04L 41/0803, H04L 41/085, H04M 11/02, H04N 7/18

(54) **SYSTEM, HAUSKOMMUNIKATIONSANLAGE UND ZENTRALE VERWALTUNGSEINHEIT**

(30) Priorität: 24.03.2025 DE 102025111226
(71) Anmelder: Horst Siedle GmbH & Co. KG., 78120 Furtwangen (DE)
(72) Erfinder: WEBER, Christoph, 70195 Stuttgart (DE); STROBEL, Peter, 79100 Freiburg (DE)
(74) Vertreter: Isarpatent

(57) **Zusammenfassung**

Die Erfindung betrifft ein System zur Verwaltung einer Hauskommunikationsanlage mit einer Vielzahl von Hauskommunikationsendgeräten, die über ein Datennetzwerk verbunden sind, und einer zentralen Verwaltungseinheit. Die zentrale Verwaltungseinheit speichert und verwaltet ein digitales Abbild der Anlage mit eindeutig identifizierten Hauskommunikationsendgeräten und synchronisiert Betriebs- und Konfigurationsdaten. Über bereitgestellte Kommunikationsverbindungen können verschiedene Benutzerrollen auf Konfigurations- und Verwaltungsfunktionen zugreifen.

## Beschreibung

### GEBIET DER ERFINDUNG

Die Erfindung betrifft ein System zur Verwaltung einer Hauskommunikationsanlage, insbesondere zur Konfiguration, Administration und Synchronisation von Hauskommunikationsendgeräten innerhalb eines Gebäudes oder Gebäudekomplexes mit einer zentralen Verwaltungseinheit. Die Erfindung betrifft ferner eine Hauskommunikationsanlage sowie eine zentrale Verwaltungseinheit zur Verwaltung eines digitalen Abbilds der Hauskommunikationsanlage.

### TECHNISCHER HINTERGRUND

Die vorliegende Erfindung bezieht sich auf das Gebiet der Hauskommunikation als Teil der Hausautomatisierung. Die Hausautomatisierung befindet sich im Umfeld des intelligenten Wohnens, welches Lösungen im privaten oder geschäftlichen Wohn- und Arbeitsbereich bezeichnet, die auf die speziellen Bedürfnisse der Bewohner von privaten Wohnhäusern, Wohnblocks oder Geschäftshäuser ausgerichtet sind, bei denen Geräte, Systeme und Technologien eingesetzt werden, die mehr Effizienz, Komfort, Wirtschaftlichkeit, Flexibilität und Sicherheit schaffen.

Ein Aspekt der Hausautomatisierung bezieht sich auf die Hauskommunikation mittels entsprechender Hauskommunikationsendgeräte oder (Gegen-)Sprechanlagen. Moderne Hauskommunikationsanlagen umfassen typischerweise eine Vielzahl von verschiedenen Hauskommunikationsendgeräten, die miteinander über ein Verbindungsnetzwerk, wie z.B. Ethernet oder ein Bussystem, gekoppelt sind. Man unterscheidet dabei zwischen so genannten Innenstationen, die in einem geschützten Bereich innerhalb des Hauses oder einer entsprechenden Wohnungseinheit angeordnet sind, und so genannte Türstationen oder Außenstationen, die im öffentlichen Bereich vor oder unmittelbar an der Haus- oder Gebäudetür, Tiefgarageneinfahrten, Zugängen zu Grundstücken, oder ähnlichem angebracht sind und über welche Besucher mit Hausbewohnern in kommunikative Verbindung treten können. Diese Hauskommunikationsendgeräte weisen meist eine Klingel oder ein Klingeltastenfeld, einen Türöffner, eine Gegensprechanlage, eine Kamera und ein Display auf, über welche eine bidirektionale Kommunikation zwischen Besucher und Haus- oder Wohnungsbesitzer ermöglicht wird. Derartige Hauskommunikationsanlagen sind allgemein bekannt, so dass darauf nicht näher eingegangen werden muss.

Hauskommunikationsanlagen werden in Wohn- und Gewerbeimmobilien eingesetzt, um die Kommunikation zwischen einer Außenstation, beispielsweise an einem Gebäudeeingang, und einer oder mehreren Innenstationen innerhalb der jeweiligen Wohneinheiten oder Nutzungseinheiten zu ermöglichen. Solche Anlagen dienen vorrangig der Sprach- und teilweise auch der Bildkommunikation und ermöglichen es den Nutzern, Besuchern Zugang zum Gebäude zu gewähren.

Klassische Systeme bestehen in der Regel aus einer Außenstation mit Ruftastern und Sprechfunktion sowie mehreren Innenstationen, die für die Annahme von Gesprächen, die Anzeige von Rufsignalen und gegebenenfalls das Ansteuern eines Türöffners ausgelegt sind. Je nach Ausbaustufe können weitere Hauskommunikationsendgeräte vorgesehen sein, beispielsweise Schaltaktoren, Sensoren, Kameras, oder Anwendungen auf mobilen Endgeräten.

Moderne Hauskommunikationsanlagen sowie deren Hauskommunikationsendgeräte sind zunehmend IP-basiert ausgeführt und damit mit dem Internet koppelbar. Durch die Verwendung eines IP-basierten Netzwerks können die einzelnen Komponenten flexibel miteinander verbunden und zusätzliche Funktionen realisiert werden. Die DE 10 2011 077 013 A1 beschreibt beispielsweise eine solche Hauskommunikationsanlage mit einem IP-basierten Hauskommunikationsnetzwerk.

Mit steigender Anzahl der Endgeräte und zunehmender Komplexität der Funktionen wachsen die Anforderungen an eine einfache Installation, Konfiguration und Verwaltung der gesamten Anlage. Insbesondere die eindeutige Zuordnung von Nutzern zu einzelnen Hauskommunikationsendgeräten sowie die Konfiguration und Anpassung von Berechtigungen und Einstellungen stellen bei bekannten Systemen häufig einen hohen manuellen Aufwand dar und erfordern spezielle Kenntnisse.

Zudem sind herkömmliche Anlagen in ihrer Funktionalität häufig auf die lokale Bedienung beschränkt, sodass eine ortsunabhängige Verwaltung oder eine rollenbasierte Zuweisung von Rechten für unterschiedliche Benutzergruppen - wie etwa Installateure, Verwalter oder Bewohner - nur eingeschränkt möglich ist.

### ZUSAMMENFASSUNG DER ERFINDUNG

Vor diesem Hintergrund besteht die Aufgabe der vorliegenden Erfindung darin, ein verbessertes System zur Verwaltung einer Hauskommunikationsanlage anzugeben, das eine einfache und effiziente Konfiguration, Verwaltung und Nutzung der Anlage ermöglicht und insbesondere die Einbindung unterschiedlicher Benutzerrollen sowie eine flexible Erweiterbarkeit der Anlage unterstützt.

Diese Aufgabe wird durch ein System zur Verwaltung einer Hauskommunikationsanlage, durch eine Hauskommunikationsanlage sowie durch eine zentrale Verwaltungseinheit mit den Merkmalen der unabhängigen Patentansprüche gelöst. Weitere vorteilhafte Ausführungsformen der Erfindung sind Gegenstand der abhängigen Patentansprüche.

### Demgemäß ist vorgesehen:

- Ein System zur Verwaltung einer Hauskommunikationsanlage, das eine Mehrzahl von Hauskommunikationsendgeräten und eine zentrale Verwaltungseinheit umfasst. Die Hauskommunikationsendgeräte sind über ein Datennetzwerk miteinander verbunden. Die zentrale Verwaltungseinheit ist dazu ausgelegt, ein digitales Abbild der Hauskommunikationsanlage zu speichern und zu verwalten. Dabei ist jedes physische Hauskommunikationsendgerät durch eine eindeutige Identifikation im digitalen Abbild registriert. Die zentrale Verwaltungseinheit ist weiterhin dazu ausgelegt, Betriebs- und Konfigurationsdaten aus dem digitalen Abbild mit den korrespondierenden Hauskommunikationsendgeräten zu synchronisieren. Ferner stellt die zentrale Verwaltungseinheit Kommunikationsverbindungen bereit, über die Benutzer mittels Benutzeranwendungen und/oder Administrationsoberflächen auf die Konfigurations- und Verwaltungsfunktionen der Hauskommunikationsanlage zugreifen können.
- Eine Hauskommunikationsanlage, die eine Mehrzahl von Hauskommunikationsendgeräten umfasst. Die Hauskommunikationsendgeräte sind über ein IP-basiertes Datennetzwerk miteinander verbunden. Die Hauskommunikationsanlage ist dazu ausgelegt, über das IP-basierte Datennetzwerk mit einer zentralen Verwaltungseinheit gekoppelt zu werden, um Betriebs- und Konfigurationsdaten auszutauschen.
- Eine zentrale Verwaltungseinheit für eine Hauskommunikationsanlage, umfassend eine Verarbeitungseinheit zur Verwaltung eines digitalen Abbilds der Hauskommunikationsanlage. Das digitale Abbild umfasst eine Repräsentation der eindeutig identifizierten Hauskommunikationsendgeräte. Die zentrale Verwaltungseinheit ist dazu ausgelegt, Betriebs- und Konfigurationsdaten aus dem digitalen Abbild mit den Hauskommunikationsendgeräten zu synchronisieren. Zudem ist die zentrale Verwaltungseinheit dazu ausgelegt, Administrationsoberflächen und/oder Benutzeranwendungen bereitzustellen, über die verschiedene Benutzer auf die Konfigurations- und Verwaltungsfunktionen der Hauskommunikationsanlage zugreifen können.

Der vorliegenden Erfindung liegt die Erkenntnis zugrunde, dass moderne Hauskommunikationsanlagen zunehmend komplexe Strukturen aufweisen und eine Vielzahl physischer Hauskommunikationsendgeräte umfassen, die in einem Netzwerk miteinander verbunden sind. Dabei entstehen neue Herausforderungen hinsichtlich der Installation, Konfiguration, Verwaltung und auch der späteren Wartung solcher Anlagen.

Insbesondere wurde erkannt, dass die Zuordnung und Verwaltung der einzelnen Hauskommunikationsendgeräte innerhalb der Anlage erhebliche Aufwände verursacht und fehleranfällig ist, wenn keine zentrale, strukturierte Verwaltung erfolgt. Diese Problematik verschärft sich durch die Notwendigkeit, die Konfigurationen im Lebenszyklus der Anlage flexibel an wechselnde Nutzer oder sich ändernde Gegebenheiten anpassen zu können.

Es ist daher eine Idee der vorliegenden Erfindung, diese Erkenntnis Rechnung zu tragen und ein System zu schaffen, bei dem sämtliche physischen Hauskommunikationsendgeräte über ein Datennetzwerk miteinander verbunden sind und über eine zentrale Verwaltungseinheit gesteuert werden. Diese Verwaltungseinheit speichert und verwaltet ein digitales Abbild der Hauskommunikationsanlage, in dem sämtliche physische Komponenten mit ihrer eindeutigen Identifikation registriert sind. Dieses Abbild bzw. die in dem Abbild vorgenommenen Konfigurationen kann dann automatisch oder auf Anfrage mit der Konfiguration der physischen Komponenten synchronisiert werden.

Hierdurch wird nicht nur eine strukturierte und fehlerreduzierte Verwaltung ermöglicht, sondern auch eine klare Grundlage geschaffen, um Betriebs- und Konfigurationsdaten der Hauskommunikationsanlage zentral zu erfassen, zu verwalten und mit den jeweiligen Endgeräten zu synchronisieren. Dieses Konzept ermöglicht es zudem, verschiedenen Benutzern in unterschiedlichen Rollen gezielt Zugriff auf Konfigurations- und Verwaltungsfunktionen zu gewähren, wodurch eine flexible und skalierbare Handhabung der gesamten Hauskommunikationsanlage erreicht wird.

Im Sinne der vorliegenden Erfindung bezeichnet der Begriff Hauskommunikationsanlage ein Kommunikationssystem für ein Gebäude oder einen Gebäudekomplex, das der sprachlichen und/oder visuellen Kommunikation zwischen unterschiedlichen Bereichen dient, insbesondere zwischen dem Außenbereich und einzelnen Wohneinheiten. Die Hauskommunikationsanlage ermöglicht es beispielsweise, einen Besucher vor dem Gebäude akustisch und visuell zu identifizieren und ihm Zugang zu gewähren. Darüber hinaus kann die Anlage Steuerungsfunktionen für gebäudetechnische Einrichtungen umfassen, wie etwa die Ansteuerung eines Türöffners oder die Erfassung von Zutrittsdaten.

Als Hauskommunikationsendgeräte werden im Rahmen der Erfindung diejenigen funktionalen Komponenten der Hauskommunikationsanlage bezeichnet, die eigenständig Kommunikations- oder Steuerungsfunktionen bereitstellen und über das Datennetzwerk der Anlage miteinander verbunden sind. Hierzu zählen insbesondere Türstationen, über die von außen Rufsignale ausgelöst sowie Audio- und Video-Kommunikation initiiert werden können, Innenstationen zur Annahme von Rufen und zur Steuerung der Anlage, Schaltaktoren zur Betätigung von Türöffnern sowie optional weitere Komponenten. Letztere können insbesondere Einrichtungen zur Erfassung von Authentifizierungsmerkmalen, wie beispielsweise RFID-Lesern, PIN-Tastaturen oder biometrischen Sensoren, umfassen, jedoch auch weitere Funktionalitäten bereitstellen.

Die zentrale Verwaltungseinheit bezeichnet im Sinne der Erfindung eine zentrale Einrichtung, die zur Verwaltung, Konfiguration und Überwachung der Hauskommunikationsanlage dient. Sie ist insbesondere dazu ausgelegt, ein digitales Abbild der Hauskommunikationsanlage einschließlich der zugehörigen Hauskommunikationsendgeräte zu speichern und zu verwalten. Dabei repräsentiert das digitale Abbild die Struktur und den Zustand der realen Anlage und ermöglicht eine zentrale Kontrolle sowie die Koordination der Endgeräte. Die zentrale Verwaltungseinheit kann als eigenständige Hardware-Komponente mit entsprechender Software realisiert sein oder als verteiltes System, das verschiedene Server- oder Cloud-Dienste kombiniert. Sie stellt Schnittstellen für verschiedene Benutzerrollen bereit und übernimmt die Synchronisation von Konfigurations- und Betriebsdaten mit den Hauskommunikationsendgeräten.

Das digitale Abbild der Hauskommunikationsanlage bezeichnet eine in der zentralen Verwaltungseinheit gespeicherte Repräsentation der realen Anlage. Es umfasst insbesondere die registrierten Hauskommunikationsendgeräte samt deren eindeutiger Identifikation sowie die zugehörigen Konfigurations- und Betriebsdaten. Das digitale Abbild bildet die Grundlage für die Steuerung und Verwaltung der Anlage und ermöglicht es, Änderungen zentral vorzunehmen und anschließend mit den physikalischen Hauskommunikationsendgeräten zu synchronisieren. Es dient zudem der Nachvollziehbarkeit von Änderungen und erleichtert Wartungs- oder Erweiterungsarbeiten.

Benutzeranwendungen bezeichnen im Rahmen der Erfindung Software-Anwendungen, die vorzugsweise auf mobilen Endgeräten oder Computern von Nutzern ausgeführt werden und die eine Interaktion mit der Hauskommunikationsanlage ermöglichen. Sie dienen insbesondere der individuellen Anpassung nutzerspezifischer Einstellungen oder der Ferninteraktion mit der Anlage, beispielsweise dem Empfang von Rufsignalen oder dem Auslösen eines Türöffners.

Administrationsoberflächen bezeichnen hingegen speziell für die Konfiguration und Verwaltung der Anlage bereitgestellte Benutzeroberflächen. Sie ermöglichen es berechtigten Benutzern, wie Installateuren oder Verwaltern, Konfigurationsdaten zu erstellen, zu bearbeiten oder bestehende Einstellungen zu verwalten. Die Administrationsoberflächen können webbasiert oder als lokale Softwarelösung realisiert sein und greifen dabei auf die zentrale Verwaltungseinheit zu.

Die Synchronisation von Betriebs- und Konfigurationsdaten bezeichnet im Sinne der Erfindung den Abgleich der in der zentralen Verwaltungseinheit gespeicherten Daten mit den tatsächlichen Hauskommunikationsendgeräten der Anlage. Hierbei werden insbesondere Konfigurationsänderungen oder Updates, die am digitalen Abbild vorgenommen wurden, an die entsprechenden Hauskommunikationsendgeräte übertragen. Die Synchronisation stellt sicher, dass die physikalischen Hauskommunikationsendgeräte stets dem aktuellen Konfigurationsstand entsprechen. Ebenso können bei Bedarf auch Betriebsdaten von den Hauskommunikationsendgeräten zur zentralen Verwaltungseinheit übertragen werden, beispielsweise für Diagnose- oder Wartungszwecke.

Für die Synchronisation wird eine geeignete Datenverbindung zwischen der zentralen Verwaltungseinheit und der Hauskommunikationsanlage aufgebaut. Diese Verbindung kann insbesondere über das Internet oder ein anderes IP-basiertes Netzwerk erfolgen. Dabei ist es möglich, dass einzelne Hauskommunikationsendgeräte direkt mit der Verwaltungseinheit kommunizieren. Alternativ kann auch eines der Hauskommunikationsendgeräte als zentrales Übertragungsgerät fungieren, welches die Kommunikation mit der Verwaltungseinheit übernimmt und die synchronisierten Daten innerhalb der Anlage an die weiteren Hauskommunikationsendgeräte verteilt.

In einer bevorzugten Ausgestaltung sind die Hauskommunikationsendgeräte über ein IP-basiertes Datennetzwerk miteinander verbunden. Durch die Verwendung eines IP-basierten Netzwerks wird eine standardisierte und flexible Datenkommunikation zwischen den Hauskommunikationsendgeräten ermöglicht. Das Datennetzwerk kann dabei als kabelgebundenes Netzwerk, beispielsweise als Ethernet-Netzwerk, ausgestaltet sein oder als drahtloses Netzwerk, beispielsweise auf Basis von WLAN. Ebenso sind Kombinationen aus kabelgebundenen und drahtlosen Netzwerkabschnitten denkbar, wodurch sich die Hauskommunikationsanlage flexibel an unterschiedliche bauliche Gegebenheiten und Anforderungen anpassen lässt. Über das IP-basierte Datennetzwerk kann die Hauskommunikationsanlage zudem mit der zentralen Verwaltungseinheit gekoppelt werden, sodass ein Austausch von Betriebs- und Konfigurationsdaten sowie eine Synchronisation mit dem digitalen Abbild der Hauskommunikationsanlage erfolgen kann.

In einer bevorzugten Ausgestaltung weist jedes Hauskommunikationsendgerät eine eindeutige Identifikation auf. Dadurch wird sichergestellt, dass jedes physische Hauskommunikationsendgerät innerhalb der Hauskommunikationsanlage eindeutig erfasst und voneinander unterschieden werden kann. Das Identifikationsmerkmal ist vorzugsweise seriennummernartig und fest im jeweiligen Hauskommunikationsendgerät hinterlegt. Zur einfachen Erfassung bei der Installation oder Inbetriebnahme wird dieses Identifikationsmerkmal zusätzlich in lesbarer, insbesondere maschinenlesbarer Form, beispielsweise als QR-Code oder Barcode, auf der Verpackung und/oder dem Gehäuse des Hauskommunikationsendgeräts angebracht. Dadurch kann die Identifikation entweder durch maschinelles Einlesen oder bei Bedarf auch manuell durch Ablesen und Eingabe der Kennung erfolgen. Die zentrale Verwaltungseinheit ist dazu ausgelegt, die eindeutige Identifikation zu erfassen und die jeweiligen Hauskommunikationsendgeräte im digitalen Abbild der Hauskommunikationsanlage zu registrieren. Dadurch wird eine eindeutige und nachvollziehbare Zuordnung der realen Komponenten zur virtuellen Repräsentation im System sichergestellt, was insbesondere für Konfiguration, Wartung und spätere Erweiterungen der Anlage vorteilhaft ist.

In einer weiteren bevorzugten Ausgestaltung ist die zentrale Verwaltungseinheit dazu ausgelegt, Benutzerrollen mit unterschiedlichen Berechtigungen für die Konfigurations- und Verwaltungsfunktionen der Hauskommunikationsanlage zu verwalten. Durch die rollenbasierte Berechtigungsstruktur wird sichergestellt, dass verschiedene Benutzergruppen nur Zugriff auf diejenigen Funktionen und Daten erhalten, die ihrem jeweiligen Aufgabenbereich entsprechen. Hierdurch wird eine klare Trennung der Zuständigkeiten ermöglicht und gleichzeitig die Datensicherheit und Systemsicherheit erhöht. Die Verwaltung der Benutzerrollen erfolgt dabei zentral in der Verwaltungseinheit. Jede Rolle kann dabei spezifische Rechte zur Konfiguration einzelner Parameter oder zum Zugriff auf bestimmte Komponenten der Hauskommunikationsanlage besitzen. Dies erlaubt eine flexible und skalierbare Gestaltung der Benutzerrechte und der Systemadministration, die sich an unterschiedliche Einsatzszenarien und Nutzerbedürfnisse anpassen lässt.

In einer weiteren bevorzugten Ausgestaltung können unterschiedliche Benutzerrollen definiert werden, denen jeweils spezifische Berechtigungen für die Konfigurations- und Verwaltungsfunktionen der Hauskommunikationsanlage zugewiesen sind. Hierzu zählen beispielsweise:
Eine Installateurrolle, die es einem berechtigten Benutzer, wie einem Elektroinstallateur oder Servicetechniker, ermöglicht, die Hauskommunikationsanlage in Betrieb zu nehmen und zu konfigurieren. Über diese Rolle können einzelne Hauskommunikationsendgeräte registriert, konfiguriert und bspw. In dem digitalen Abbild für den Betrieb vorbereitet werden.

Eine Verwalterrolle, die zur übergeordneten Administration der Hauskommunikationsanlage und zur Verwaltung der Benutzerrechte berechtigt ist. Ein Benutzer mit dieser Rolle, wie etwa ein Gebäudeverwalter oder Hausmeister, kann systemweite Einstellungen vornehmen sowie Benutzerkonten und Zugriffsrechte verwalten.

Eine Nutzerrolle, die es einem Bewohner oder Nutzer einer Gebäudeeinheit ermöglicht, individuelle Einstellungen vorzunehmen. Dazu gehören insbesondere die Auswahl des Klingeltons, die Einstellung der Ruftonlautstärke oder weitere persönliche Präferenzen im Zusammenhang mit der Nutzung der Hauskommunikationsendgeräte.

Durch diese Rollenverteilung wird eine klare Trennung der Verantwortlichkeiten und Zugriffsrechte sichergestellt.

In einer weiteren bevorzugten Ausgestaltung umfasst mindestens ein Hauskommunikationsendgerät, insbesondere eine Türstation, ein Anzeigeelement, das zur Darstellung von Beschriftungen ausgelegt ist. Über dieses Anzeigeelement können insbesondere die Namen der den jeweiligen Gebäudeeinheiten zugeordneten Nutzer angezeigt werden. Dabei ist die zentrale Verwaltungseinheit so ausgestaltet, dass für eine digitale Anzeige die Beschriftung durch Übertragung entsprechender Konfigurationsdaten an das jeweilige Hauskommunikationsendgerät aktualisiert werden kann. So ist es beispielsweise möglich, bei einem Nutzerwechsel die angezeigten Namen an der Türstation automatisch zu ändern.

Alternativ oder zusätzlich ist die zentrale Verwaltungseinheit dazu ausgelegt, bei einer statischen Beschriftung automatisch einen Auftrag für die Erstellung einer neuen Beschriftung zu generieren und bereitzustellen, wenn sich die Zuordnung von Nutzern zu einer Gebäudeeinheit ändert. Ein solcher Auftrag könnte beispielsweise zur Herstellung und Lieferung eines physischen Namensschildes verwendet werden.

Durch diese Ausgestaltung wird eine flexible und effiziente Anpassung der Beschriftung an geänderte Nutzerzuordnungen ermöglicht, sowohl bei digitalen als auch bei klassischen statischen Beschriftungen.

In einer weiteren bevorzugten Ausgestaltung umfasst das System ein externes Verwaltungssystem, das dazu ausgelegt ist, nutzerspezifische und/oder einer Gebäudeeinheit zugeordnete Daten zu verwalten und bereitzustellen. Ein solches Verwaltungssystem kann beispielsweise ein Gebäudeverwaltungssystem oder ein Enterprise-Resource-Planning-System (ERP-System) sein, in dem relevante Informationen zu den einzelnen Nutzern oder Gebäudeeinheiten hinterlegt sind. Die zentrale Verwaltungseinheit ist dabei so ausgelegt, dass sie die aus dem externen Verwaltungssystem bereitgestellten Daten einer Ruftaste oder einem Anzeigeelement eines Hauskommunikationsendgeräts zuordnen und diese Daten zur Aktualisierung einer digitalen Anzeige verwenden kann. Dadurch wird es beispielsweise möglich, bei einer Änderung von Nutzerdaten im externen System die Anzeige an der Türstation automatisch entsprechend anzupassen.

Alternativ oder ergänzend ist die zentrale Verwaltungseinheit so ausgestaltet, dass basierend auf den bereitgestellten Daten aus dem externen Verwaltungssystem automatisch ein Auftrag für eine neue statische Beschriftung generiert und bereitgestellt werden kann. Auf diese Weise wird eine konsistente und automatisierte Pflege der Beschriftungen sowohl bei digitalen als auch bei statischen Anzeigen unterstützt.

In einer weiteren bevorzugten Ausgestaltung umfasst das System eine zentrale Speichereinheit, die dazu ausgelegt ist, mit der Hauskommunikationsanlage gekoppelt zu werden. Die zentrale Speichereinheit dient zur Speicherung von Kommunikationsereignissen, wobei es sich insbesondere um Bilder und/oder Sprachnachrichten handeln kann, die von mindestens einem Hauskommunikationsendgerät erzeugt wurden. Solche Kommunikationsereignisse können beispielsweise bei einem Klingelvorgang an der Türstation entstehen, wenn ein Besucher erfasst oder eine Sprachnachricht hinterlassen wird. Die zentrale Speichereinheit ist ferner dazu ausgelegt, gespeicherte Kommunikationsereignisse an mindestens ein Hauskommunikationsendgerät und/oder eine Benutzeranwendung bereitzustellen. Dadurch kann ein Nutzer diese gespeicherten Ereignisse zu einem späteren Zeitpunkt abrufen, beispielsweise über eine Innenstation oder eine auf einem mobilen Endgerät ausgeführte Benutzeranwendung. Hierdurch wird es unter anderem ermöglicht, verpasste Besuchsvorgänge nachzuvollziehen oder hinterlassene Sprachnachrichten abzuhören. Die zentrale Speichereinheit kann dabei entweder als integraler Bestandteil der zentralen Verwaltungseinheit ausgeführt sein oder alternativ als separate Einheit außerhalb des Gebäudes vorgesehen sein. In letzterem Fall ist die zentrale Speichereinheit über Datenverbindungen kommunikativ mit der Hauskommunikationsanlage sowie der zentralen Verwaltungseinheit gekoppelt.

In einer bevorzugten Ausführungsform umfasst die zentrale Verwaltungseinheit eine Verarbeitungseinheit zur Verwaltung und Synchronisation der Hauskommunikationsendgeräte sowie eine Verwaltungsplattform zur Bereitstellung von Administrationsoberflächen. Die Verarbeitungseinheit ist dazu ausgelegt, ein digitales Abbild der Hauskommunikationsanlage einschließlich der eindeutig identifizierten Hauskommunikationsendgeräte zu verwalten. Weiterhin ist die Verarbeitungseinheit dazu eingerichtet, Betriebs- und Konfigurationsdaten aus dem digitalen Abbild mit den Hauskommunikationsendgeräten zu synchronisieren. Die Verwaltungsplattform ist dazu ausgelegt, Administrationsoberflächen bereitzustellen, über die Konfigurationsdaten für die Hauskommunikationsanlage erstellt und verwaltet werden können.

In einer weiteren bevorzugten Ausführungsform umfasst das System mindestens ein erstes mobiles Endgerät, das eine Benutzeranwendung ausführt. Die Benutzeranwendung ist insbesondere dazu ausgelegt, mit der zentralen Verwaltungseinheit zu kommunizieren, um nutzerspezifische Einstellungen für die Hauskommunikationsanlage zu verwalten. Dies kann beispielsweise die Anpassung von Klingeltönen, Lautstärken oder individueller Anzeige- und Steuerungsfunktionen umfassen. Die Kommunikation erfolgt dabei typischerweise über eine drahtlose Datenverbindung, insbesondere über das Internet oder ein Mobilfunknetz. Ferner kann die Benutzeranwendung dazu eingerichtet sein, Kommunikationsereignisse aus der zentralen Speichereinheit abzurufen. Zu solchen Kommunikationsereignissen zählen beispielsweise Bild- oder Sprachnachrichten, die an einer Türstation erfasst und in der Speichereinheit gespeichert wurden. Auf diese Weise kann der Nutzer auch ortsunabhängig auf vergangene Ereignisse zugreifen, um sich beispielsweise über verpasste Besucher zu informieren. Darüber hinaus ermöglicht die Benutzeranwendung eine Ferninteraktion mit mindestens einem Hauskommunikationsendgerät. Hierdurch kann der Nutzer von einem beliebigen Standort aus mit einer Person vor der Türstation kommunizieren oder einen Türöffner betätigen.

In einer weiteren bevorzugten Ausführungsform umfasst das System mindestens ein zweites mobiles Endgerät, das eine Installationsanwendung ausführt. Die Installationsanwendung ist insbesondere für die Inbetriebnahme und Konfiguration der Hauskommunikationsanlage durch einen Installateur oder eine vergleichbare Fachkraft vorgesehen. Sie bietet zwei alternative oder kombinierbare Betriebsmodi:
Zum einen ist die Installationsanwendung dazu ausgelegt, direkt mit der Hauskommunikationsanlage zu kommunizieren. Dies erfolgt vorzugsweise über eine lokale Funkverbindung, beispielsweise mittels WLAN oder Bluetooth. Über diese Verbindung kann die Anwendung einzelne Hauskommunikationsendgeräte identifizieren. Die Identifikation erfolgt anhand der eindeutigen Identifikationsmerkmale der Endgeräte, die von der Installationsanwendung erkannt und erfasst werden. Darauf aufbauend kann der Installateur eine Konfiguration der identifizierten Hauskommunikationsendgeräte erstellen, die anschließend direkt an die Hauskommunikationsanlage beziehungsweise die jeweiligen Endgeräte übertragen wird. Dadurch wird eine unmittelbare und effiziente Inbetriebnahme der Anlage ermöglicht, ohne dass eine Verbindung zur zentralen Verwaltungseinheit erforderlich ist.

Alternativ oder zusätzlich ist die Installationsanwendung dazu eingerichtet, Konfigurationsdaten aus der zentralen Verwaltungseinheit abzurufen. Die abgerufenen Konfigurationsdaten können von der Installationsanwendung bearbeitet werden, um beispielsweise Anpassungen an den Endgeräteeinstellungen oder den Zuordnungen vorzunehmen. Im Anschluss können die bearbeiteten Konfigurationsdaten wieder an die zentrale Verwaltungseinheit zurück übertragen werden, wo sie zur weiteren Nutzung oder zur Übertragung an die Hauskommunikationsanlage bereitgestellt werden.

Diese Ausgestaltung ermöglicht eine flexible und effiziente Handhabung der Konfiguration, da sowohl eine direkte vor-Ort-Interaktion mit der Anlage als auch eine zentrale Konfigurationsbearbeitung über die Verwaltungseinheit unterstützt wird.

In einer weiteren bevorzugten Ausführungsform umfasst die Hauskommunikationsanlage mindestens ein Hauskommunikationsendgerät, das dazu ausgelegt ist, ein Authentifizierungsmerkmal zu erfassen. Ein solches Hauskommunikationsendgerät kann beispielsweise eine Türstation oder ein Zugangsterminal sein, das mit geeigneten Sensoren oder Lesegeräten ausgestattet ist. Als Authentifizierungsmerkmal kommen verschiedene Arten von Merkmalen infrage, wie etwa ein PIN-Code, biometrische Merkmale (z. B. Fingerabdruck oder Gesichtserkennung) oder ein elektronisches Identifikationsmittel wie ein RFID-Transponder oder eine Chipkarte. Die zentrale Verwaltungseinheit ist dabei dazu ausgelegt, die erfassten Authentifizierungsmerkmale zur Verwaltung von Zugangsberechtigungen zu verwenden. Hierbei können einzelnen Authentifizierungsmerkmalen spezifische Zugangsrechte zugewiesen werden, um so den Zugang zu bestimmten Bereichen oder Funktionen zu steuern. Zudem ist die zentrale Verwaltungseinheit dazu ausgelegt, Änderungen der Zugangsberechtigungen an das jeweilige Hauskommunikationsendgerät zu übertragen. Dadurch wird es dem Hauskommunikationsendgerät ermöglicht, die Zugangsberechtigung unmittelbar unter Verwendung des erfassten Authentifizierungsmerkmals freizugeben.

In einer weiteren bevorzugten Ausführungsform umfasst die zentrale Verwaltungseinheit eine zentrale Speichereinheit. Die zentrale Speichereinheit ist dabei dazu ausgelegt, mit der Hauskommunikationsanlage gekoppelt zu werden und Kommunikationsereignisse, insbesondere Bilder und/oder Sprachnachrichten, von mindestens einem Hauskommunikationsendgerät zu speichern. Die zentrale Verwaltungseinheit ist ferner dazu ausgelegt, auf in der zentralen Speichereinheit abgelegte Kommunikationsereignisse zuzugreifen und diese zur Anzeige an mindestens ein Hauskommunikationsendgerät und/oder eine Benutzeranwendung weiterzuleiten. Durch diese Ausgestaltung wird es ermöglicht, Kommunikationsereignisse zentral zu speichern und bei Bedarf gezielt für die Anzeige oder weitere Verarbeitung bereitzustellen. Dabei kann die zentrale Speichereinheit entweder als integraler Bestandteil der zentralen Verwaltungseinheit ausgeführt sein oder als separate, jedoch mit der zentralen Verwaltungseinheit verbundene Komponente realisiert werden.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine schematische Darstellung eines Systems zur Verwaltung einer Hauskommunikationsanlage mit mehreren Hauskommunikationsendgeräten und einer zentralen Verwaltungseinheit;
- Fig. 2: eine Übersicht mehrerer Benutzer mit unterschiedlichen Benutzerrollen und deren Interaktion mit der Hauskommunikationsanlage und der zentralen Verwaltungseinheit gemäß einer ersten Ausführungsform;
- Fig. 3: eine erweiterte Ausführungsform eines Systems einer aus Kommunikationsanlage und mehrerer Benutzer mit unterschiedlichen Benutzerrollen.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

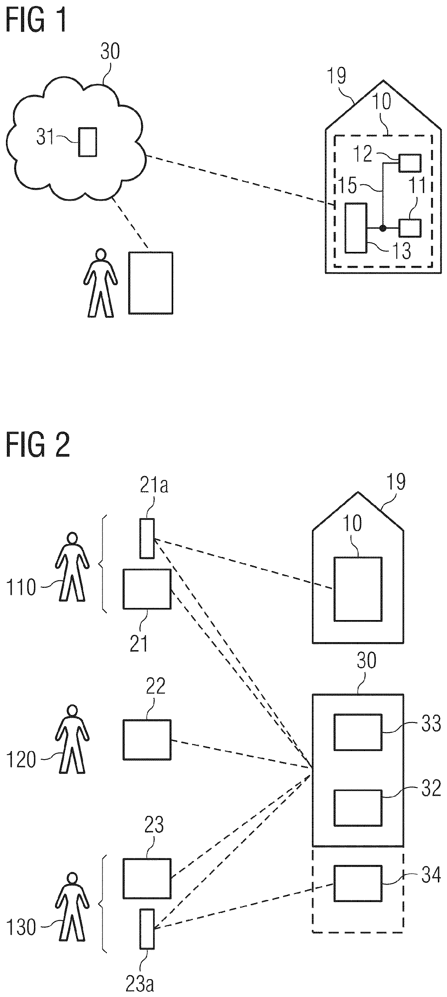

Figur 1 zeigt eine beispielhafte Ausführungsform eines erfindungsgemäßen Systems zur Verwaltung einer Hauskommunikationsanlage 10, die in einem Gebäude 19 installiert ist. Die Hauskommunikationsanlage 10 umfasst mehrere Hauskommunikationsendgeräte 11, 12 und 13, die innerhalb des Gebäudes 19 vorgesehen sind.

Die Hauskommunikationsendgeräte 11 bis 13 sind über ein IP-basiertes Datennetzwerk 15 miteinander verbunden. In der dargestellten Ausführungsform ist dieses Datennetzwerk 15 als lokales Netzwerk innerhalb des Gebäudes 19 ausgeführt. Es kann sowohl kabelgebunden, beispielsweise als Ethernet-Netzwerk, als auch drahtlos, beispielsweise mittels WLAN, realisiert sein. Ebenso ist eine Mischform vorgesehen, bei der einzelne Hauskommunikationsendgeräte kabelgebunden und andere drahtlos in das Netzwerk eingebunden sind. Bei einer kabelgebundenen Ausführung kann das Datennetzwerk 15 zudem zur Energieversorgung der Endgeräte genutzt werden, beispielsweise mittels Power over Ethernet (PoE). Bei drahtlos angebundenen Komponenten ist dagegen eine separate Energieversorgung erforderlich.

Als Beispiele für Hauskommunikationsendgeräte sind in dieser Ausführungsform eine Türstation 11, eine Innenstation 12 sowie ein Steuergerät oder Schaltaktor 13 dargestellt. Der Schaltaktor 13 ist beispielsweise dazu ausgelegt, einen Türöffner anzusteuern und zu betätigen. Darüber hinaus können weitere Hauskommunikationsendgeräte vorgesehen sein, beispielsweise Sensoren oder Kameras, aber auch Komponenten zur Erfassung von Authentifizierungsmerkmalen wie ein Lesegerät für PIN-Codes, biometrische Merkmale oder RFID-Transponder. Ein derartiges Lesegerät kann als separate Komponente ausgebildet oder in die Türstation 11 integriert sein.

Nach erfolgreicher Konfiguration ist die Hauskommunikationsanlage 10 grundsätzlich in der Lage, autark zu arbeiten und die Grundfunktionen der Hauskommunikation bereitzustellen. Zusätzlich kann die Hauskommunikationsanlage 10 jedoch über eine Datenverbindung, beispielsweise eine Internetverbindung, mit einer außerhalb des Gebäudes 19 angeordneten zentralen Verwaltungseinheit 30 gekoppelt werden.

Über diese Datenverbindung kann die zentrale Verwaltungseinheit 30 verschiedene Funktionen bereitstellen. So ist es insbesondere möglich, eine zuvor in der zentralen Verwaltungseinheit 30 erstellte oder modifizierte Konfiguration auf die Hauskommunikationsanlage 10 zu übertragen, sodass die einzelnen Hauskommunikationsendgeräte 11 bis 13 gemäß dieser vorbereiteten Konfiguration eingerichtet werden. Ebenso können über die Datenverbindung Software- oder Firmware-Updates eingespielt werden. Darüber hinaus lassen sich zusätzliche Funktionalitäten bereitstellen, welche über die Grundfunktionen der autarken Anlage hinausgehen.

Die zentrale Verwaltungseinheit 30 ist dabei dazu ausgelegt, ein digitales Abbild 31 der Hauskommunikationsanlage 10 einschließlich der eindeutig identifizierten Hauskommunikationsendgeräte zu speichern und zu verwalten. Dieses digitale Abbild bildet die Grundlage für die zentrale Steuerung und Verwaltung der gesamten Hauskommunikationsanlage 10 und ermöglicht eine gezielte Synchronisation von Betriebs- und Konfigurationsdaten zwischen der Verwaltungseinheit 30 und den Hauskommunikationsendgeräten 11 bis 13.

Um das digitale Abbild 31 der Hauskommunikationsanlage 10 zu erstellen, erfasst ein Installateur oder Konfigurator zunächst die eindeutige Identifikation der in der realen Anlage verbauten Hauskommunikationsendgeräte 11 bis 13. Hierzu ist jedes Hauskommunikationsendgerät 11-13 mit einem Identifikationsmerkmal versehen, das bevorzugt in Form eines maschinenlesbaren Codes, beispielsweise eines QR-Codes, auf dem jeweiligen Hauskommunikationsendgerät 11-13 und/oder der Verpackung angebracht ist.

Der Installateur oder Konfigurator kann die Identifikationsmerkmale der einzelnen Hauskommunikationsendgeräte 11-13 mit einem geeigneten Lesegerät oder einer mobilen Installationsanwendung auf einem mobilen Endgerät erfassen. Alternativ oder ergänzend kann die Identifikation auch durch manuelle Eingabe einer auf dem Hauskommunikationsendgerät 11-13 angebrachten Seriennummer erfolgen. Über die erfassten Identifikationsmerkmale kann die zentrale Verwaltungseinheit 30 die Art und die jeweiligen Funktionalitäten der einzelnen Hauskommunikationsendgeräte 11-13 eindeutig bestimmen.

Auf Grundlage dieser erfassten Daten wird in der zentralen Verwaltungseinheit 30 das digitale Abbild 31 der Hauskommunikationsanlage 10 erstellt. Innerhalb dieses digitalen Abbilds 31 werden die einzelnen Hauskommunikationsendgeräte 11-13 entsprechend ihrer Funktionalität abgebildet und konfigurierbare Parameter definiert. Die erstellte Konfiguration kann anschließend über die Datenverbindung an die Hauskommunikationsanlage 10 übermittelt werden, sodass die jeweiligen Hauskommunikationsendgeräte 11-13 gemäß dem digitalen Abbild 31 automatisch eingerichtet werden.

Über die zentrale Verwaltungseinheit 30 können darüber hinaus verschiedene zusätzliche Funktionalitäten bereitgestellt werden, welche die Administration und Konfiguration der Hauskommunikationsanlage 10 unterstützen und erweitern. So kann die Verwaltungseinheit 30 beispielsweise dazu genutzt werden, die Konfiguration der Anlage 10 anzupassen, indem etwa die Zuordnung zwischen einzelnen Ruftasten an der Türstation 11 und den korrespondierenden Innenstationen 12 geändert oder erweitert wird.

Zudem ermöglicht die zentrale Verwaltungseinheit 30 die Freischaltung optionaler Funktionalitäten einzelner Hauskommunikationsendgeräte 11-13 oder der gesamten Anlage 10. Auch die Benutzerverwaltung kann über die zentrale Verwaltungseinheit 30 erfolgen, wobei einzelnen Benutzern individuelle Berechtigungen oder Zugriffsrechte zugewiesen und bei Bedarf angepasst werden können.

Die nachfolgend beschriebenen Ausführungsformen zeigen beispielhaft verschiedene Möglichkeiten zur Umsetzung dieser Funktionen.

Figur 2 zeigt schematisch die Einbindung verschiedener Benutzerrollen bei der Verwaltung und dem Betrieb der Hauskommunikationsanlage 10. In dem dargestellten Beispiel sind drei Benutzer 110, 120 und 130 vorgesehen, denen unterschiedliche Rollen zugewiesen sind.

Einem ersten Benutzer 110 ist hierbei die Rolle eines Installateurs zugewiesen. Der Benutzer 110 übernimmt im Rahmen dieser Rolle die Inbetriebnahme und Konfiguration der Hauskommunikationsanlage 10 sowie die Durchführung von Wartungsarbeiten oder Modifikationen während des Betriebs. Zu den Aufgaben des Installateurs gehört unter anderem das Erfassen der eindeutigen Identifikation der realen physikalischen Hauskommunikationsendgeräte 11-13, beispielsweise durch Scannen von aufgebrachten maschinenlesbaren Codes, um diese in das digitale Abbild 31 der zentralen Verwaltungseinheit 30 zu überführen.

Darüber hinaus kann der Installateur 110 die Einbauorte der einzelnen Hauskommunikationsendgeräte 11-13 innerhalb des Gebäudes 19 festlegen sowie deren Zuordnung konfigurieren. Hierzu gehört insbesondere die Verknüpfung von Ruftasten einer Türstation 11 mit korrespondierenden Innenstationen 12, um sicherzustellen, dass eingehende Rufsignale an den richtigen Zielpunkten signalisiert werden. Auch das Überspielen von Software- oder Firmware-Updates an einzelne Hauskommunikationsendgeräte 11-13 der Anlage 10 kann durch den Installateur 110 erfolgen.

Einem zweiten Benutzer 120 ist die Rolle eines Verwalters zugewiesen. Der Verwalter 120 kann insbesondere über die zentrale Verwaltungseinheit 30 auf die Hauskommunikationsanlage 10 zugreifen und ist für deren Administration während des laufenden Betriebs verantwortlich. Zu den Aufgaben des Verwalters 120 gehört unter anderem die Verwaltung der Benutzerrechte innerhalb des Systems. So kann der Verwalter 120 beispielsweise festlegen, welche Funktionen dem Installateur 110 weiterhin zur Verfügung stehen oder ob bestimmte Modifikationen durch den Installateur gesperrt oder beschränkt werden sollen.

Darüber hinaus ist der Verwalter 120 dazu berechtigt, Nutzer 130 innerhalb des Systems anzulegen, zu verwalten und ihnen entsprechende Rechte zuzuweisen. Insbesondere bei einem Nutzerwechsel, beispielsweise beim Wechsel der Bewohner einer Wohneinheit innerhalb des Gebäudes 19, ist der Verwalter 120 in der Lage, die bisherigen Zugriffsrechte zu sperren, neue Nutzer 130 anzulegen und die Zuordnungen innerhalb der Anlage 10 entsprechend zu aktualisieren.

Diese Aktualisierung kann auch die Anpassung von Beschriftungen an den Hauskommunikationsendgeräten 11, wie beispielsweise einem Namensschild an einer Ruftaste einer Türstation 11, umfassen. Auf diese Weise ist sichergestellt, dass die aktuelle Zuordnung zwischen den Bewohnern und den jeweiligen Ruftasten stets korrekt dargestellt wird. Die Anpassung der Beschriftung an den Hauskommunikationsendgeräten 11, insbesondere an einer Ruftaste einer Türstation 11, kann auf zwei unterschiedliche Arten erfolgen.

In einer ersten Ausgestaltung ist das Hauskommunikationsendgerät 11 mit einer statischen Beschriftung versehen, beispielsweise einem gedruckten oder gravierten Namensschild. Im Falle eines Nutzerwechsels kann der Verwalter 120 über die zentrale Verwaltungseinheit 30 automatisch einen Auftrag für die Herstellung einer neuen Beschriftung generieren. Dieser Auftrag kann an einen externen Beschriftungsservice übermittelt werden, der für die Erstellung und Lieferung der neuen Namensschilder verantwortlich ist. Die neue Beschriftung kann dann vor Ort ausgetauscht werden.

In einer alternativen Ausgestaltung weist das Hauskommunikationsendgerät 11, insbesondere die Türstation 11, ein digitales Anzeigeelement auf, das zur Darstellung der Beschriftung ausgelegt ist. In diesem Fall kann der Verwalter 120 über die zentrale Verwaltungseinheit 30 eine Aktualisierung der angezeigten Beschriftung veranlassen. Hierzu werden entsprechende Konfigurationsdaten an das digitale Anzeigeelement übertragen, wodurch die aktuelle Zuordnung zum jeweiligen Nutzer 130 direkt und ohne physischen Austausch der Beschriftung angepasst werden kann.

Beide Varianten ermöglichen es, die Beschriftung bei einem Wechsel von Nutzern effizient und zuverlässig zu aktualisieren und so die eindeutige Zuordnung von Ruftasten zu den jeweiligen Nutzern sicherzustellen.

Der Nutzer 130 kann neben der Nutzung der ihm zugeordneten Hauskommunikationsendgeräte 11-13, insbesondere der zugehörigen Innenstationen 12, zusätzlich eine mobile Anwendung auf einem mobilen Endgerät 23a verwenden. Die Berechtigung zur Nutzung dieser Anwendung wird durch den Verwalter 120 über die zentrale Verwaltungseinheit 30 erteilt und verwaltet. Über das mobile Endgerät 23a kann der Nutzer 130 verschiedene nutzerspezifische Parameter der ihm zugeordneten Hauskommunikationsendgeräte anpassen. Hierzu zählen beispielhaft die Einstellung der Lautstärke, die Auswahl eines Ruftons oder weitere individuelle Konfigurationen.

Darüber hinaus kann die mobile Anwendung auf dem Endgerät 23a als zusätzliche virtuelle Innenstation verwendet werden. Der Nutzer 130 erhält dadurch die Möglichkeit, beispielsweise einen eingehenden Ruf an der Türstation 11 auch über das mobile Endgerät 23a anzunehmen oder eine Türöffnung zu veranlassen. Ferner kann die Anwendung dem Nutzer 130 den Zugriff auf in einer Speichereinheit 34 abgelegte Daten ermöglichen. Auf diese Weise können gespeicherte Kommunikationsereignisse wie Bilder oder Sprachnachrichten abgerufen und angezeigt werden.

Die zentrale Verwaltungseinheit 30 umfasst eine Verarbeitungseinheit 32 sowie eine Verwaltungsplattform 33. Die Verarbeitungseinheit 32 ist insbesondere für die Verwaltung des digitalen Abbilds 31 der Hauskommunikationsanlage 10 zuständig. Hier werden die Betriebs- und Konfigurationsdaten der einzelnen Hauskommunikationsendgeräte 11-13 gespeichert und verwaltet. Ebenso erfolgt von der Verarbeitungseinheit 32 aus die Synchronisation dieser Daten mit den entsprechenden physischen Hauskommunikationsendgeräten der Anlage 10.

Die Verwaltungsplattform 33 ist dazu ausgelegt, Administrationsoberflächen bereitzustellen, über die Benutzer mit entsprechenden Berechtigungen Zugriff auf die Konfigurations- und Verwaltungsfunktionen der Anlage erhalten. Über diese Oberflächen können beispielsweise Konfigurationsdaten erstellt, angepasst oder verwaltet werden.

Die zentrale Verwaltungseinheit 30 umfasst eine Verarbeitungseinheit 32 sowie eine Verwaltungsplattform 33. Die Verarbeitungseinheit 32 verwaltet das digitale Abbild der Hauskommunikationsanlage 10 und synchronisiert die Konfigurations- und Betriebsdaten mit den Hauskommunikationsendgeräten 11-13. Über die Verwaltungsplattform 33 werden Administrationsoberflächen bereitgestellt, die es dem Verwalter 120 ermöglichen, Konfigurationen der Anlage anzupassen und Benutzerrechte zu verwalten. Sofern entsprechende Berechtigungen vorliegen, kann auch ein Installateur 110 über diese Administrationsoberflächen Änderungen an der Konfiguration vornehmen.

Zusätzlich ist eine zentrale Speichereinheit 34 vorgesehen, die entweder als Bestandteil der Verwaltungseinheit 30 ausgeführt oder als separate externe Einheit realisiert sein kann. In dieser Speichereinheit 34 werden Kommunikationsereignisse wie Bilder und Sprachnachrichten abgelegt. Der Zugriff auf die gespeicherten Daten kann sowohl über die Verwaltungseinheit 30 als auch direkt durch berechtigte Nutzer erfolgen, beispielsweise über ein mobiles Endgerät 23a.

Der Installateur 110 kann über ein geeignetes Endgerät 21, beispielsweise einen Desktop-Computer, ein Tablet oder ein vergleichbares Gerät, auf eine für ihn vorgesehene Administrationsoberfläche der Verwaltungsplattform 33 zugreifen. Über diese Administrationsoberfläche kann der Installateur 110 Konfigurationsaufgaben durchführen, insbesondere die einzelnen Hauskommunikationsendgeräte 11-13 auf Grundlage ihrer eindeutigen Identifikation erfassen und dem digitalen Abbild 31 der Verwaltungseinheit 30 zuordnen.

Im Rahmen von Wartungsarbeiten oder bei einem Defekt eines Hauskommunikationsendgeräts 11-13 kann der Installateur 110 über die Administrationsoberfläche das betroffene Endgerät im digitalen Abbild 31 identifizieren. Anschließend kann die eindeutige Identifikation eines Ersatzgeräts erfasst und hinterlegt werden. Die bisherige Konfiguration des defekten Hauskommunikationsendgeräts 11-13 wird daraufhin automatisch dem neuen Ersatzgerät zugewiesen. Dadurch wird es ermöglicht, dass die Funktionalität der Hauskommunikationsanlage 10 ohne erneute manuelle Konfiguration des Ersatzgeräts nahtlos erhalten bleibt.

Alternativ oder ergänzend kann der Installateur 110 ein mobiles Endgerät 21a verwenden, auf dem eine spezielle Installationsanwendung ausgeführt wird. Über diese Installationsanwendung ist es dem Installateur 110 möglich, die eindeutige Identifikation eines Hauskommunikationsendgeräts 11, 12, 13 direkt einzuscannen, wobei die Identifikation beispielsweise als QR-Code oder in einer anderen geeigneten Form auf dem jeweiligen Hauskommunikationsendgerät 11, 12, 13 oder dessen Verpackung angebracht sein kann. Nach dem Erfassen der eindeutigen Identifikation kann der Installateur 110 mit der Installationsanwendung eine Konfiguration der Hauskommunikationsanlage 10 erstellen, die sowohl die aufgenommenen Hauskommunikationsendgeräte 11, 12, 13 als auch deren Zuordnung innerhalb der Hauskommunikationsanlage 10 berücksichtigt.

Die erstellte Konfiguration kann drahtlos direkt an die Hauskommunikationsanlage 10 übertragen werden, indem eine drahtlose Kommunikationsverbindung zwischen dem mobilen Endgerät 21a und einem der Hauskommunikationsendgeräte 11, 12, 13 aufgebaut wird. Über das IP-basierte Datennetzwerk 15 der Hauskommunikationsanlage 10 erfolgt anschließend die Verteilung der Konfiguration an die weiteren Hauskommunikationsendgeräte 11, 12, 13. Alternativ ist es möglich, dass die Installationsanwendung eine Verbindung zur zentralen Verwaltungseinheit 30 aufbaut, sodass der Installateur 110 eine bereits in der zentralen Verwaltungseinheit 30 gespeicherte Konfiguration auf Basis des digitalen Abbilds 31 abrufen oder eine neu erstellte oder modifizierte Konfiguration an die zentrale Verwaltungseinheit 30 übertragen kann. Besteht eine Verbindung zwischen der zentralen Verwaltungseinheit 30 und der Hauskommunikationsanlage 10, kann die dort gespeicherte Konfiguration an die Hauskommunikationsanlage 10 und deren Hauskommunikationsendgeräte 11, 12, 13 übertragen werden.

Der Verwalter 120 kann sich über ein Endgerät 22, bei dem es sich beispielsweise um einen Desktop-Computer, ein Tablet oder ein vergleichbares Gerät handeln kann, mit der Verwaltungsplattform 33 der zentralen Verwaltungseinheit 30 verbinden. Über diese Verbindung wird dem Verwalter 120 eine für seine Rolle vorgesehene Administrationsoberfläche bereitgestellt. Über die Administrationsoberfläche erhält der Verwalter 120 Zugriff auf die Konfigurations- und Verwaltungsfunktionen der Hauskommunikationsanlage 10.

Der Verwalter 120 ist befugt, die Konfiguration der Hauskommunikationsanlage 10 anzupassen, beispielsweise indem er Zuordnungen zwischen Ruftasten der Türstation 11 und den Innenstationen 12 ändert oder zusätzliche Funktionen einzelner Hauskommunikationsendgeräte 11, 12, 13 freischaltet. Darüber hinaus kann der Verwalter 120 die Benutzerverwaltung übernehmen. Hierzu gehört es insbesondere, neue Nutzer 130 anzulegen, ihnen entsprechende Berechtigungen zuzuweisen oder bestehende Nutzer 130 zu sperren.

Im Falle eines Nutzerwechsels, wie beispielsweise dem Wechsel der Bewohner einer Wohneinheit, ist der Verwalter 120 zudem in der Lage, alle notwendigen Anpassungen im digitalen Abbild 31 vorzunehmen. Dazu zählt insbesondere die Zuordnung der neuen Nutzer 130 zu den entsprechenden Hauskommunikationsendgeräten 11, 12, 13 sowie die Aktualisierung von Beschriftungen an der Türstation 11.

Je nach Ausführung der Hauskommunikationsanlage 10 kann der Verwalter 120 hierbei sowohl die digitale Beschriftung eines Anzeigeelements der Türstation 11 anpassen als auch, bei einer statischen Beschriftung, einen Auftrag zur Herstellung und Bereitstellung eines neuen Namensschilds generieren.

Zusätzlich hat der Verwalter 120 die Möglichkeit, bestimmte Änderungen und Berechtigungen für den Installateur 110 freizugeben oder einzuschränken, sodass dieser bei Bedarf ebenfalls über die Verwaltungsplattform 33 Änderungen vornehmen kann.

Der Nutzer 130 kann sich über ein Endgerät 23, bei dem es sich beispielsweise um einen Desktop-Computer, ein Tablet oder ein vergleichbares Gerät handeln kann, mit der Verwaltungsplattform 33 der zentralen Verwaltungseinheit 30 verbinden. Über diese Verbindung wird dem Nutzer 130 eine für ihn vorgesehene Benutzeroberfläche bereitgestellt, über welche individuelle Anpassungen der ihm zugeordneten Hauskommunikationsendgeräte 11, 12, 13 vorgenommen werden können.

Hierzu zählt insbesondere die Möglichkeit, Parameter wie Lautstärke, Rufton oder weitere nutzerspezifische Einstellungen zu konfigurieren. Abhängig von der jeweiligen Ausgestaltung können dem Nutzer 130 über die Benutzeroberfläche auch zusätzliche Funktionen der Hauskommunikationsanlage 10 bereitgestellt werden, beispielsweise das Abrufen von Bildern oder Nachrichten von der Speichereinheit 34.

Darüber hinaus steht dem Nutzer 130 eine mobile Anwendung zur Verfügung, die auf einem mobilen Endgerät 23a ausgeführt wird. Über diese mobile Anwendung kann der Nutzer 130 ebenfalls auf die ihm zugeordneten Funktionen der Hauskommunikationsanlage 10 zugreifen. Die mobile Anwendung ermöglicht es dem Nutzer 130, die Hauskommunikationsanlage 10 auch aus der Ferne zu bedienen.

Hierzu gehört unter anderem die Möglichkeit, einen eingehenden Ruf an der Türstation 11 über das mobile Endgerät 23a anzunehmen, mit einem Besucher zu kommunizieren oder eine Türöffnung zu veranlassen. Zusätzlich bietet die mobile Anwendung dem Nutzer 130 Zugriff auf in der Speichereinheit 34 abgelegte Kommunikationsereignisse, wie beispielsweise Bilder oder Sprachnachrichten. Diese gespeicherten Daten können über die mobile Anwendung abgerufen und angezeigt werden, wobei der Zugriff entweder über die zentrale Verwaltungseinheit 30 erfolgt oder - bei entsprechender Ausgestaltung - auch eine direkte Verbindung zur Speichereinheit 34 möglich ist.

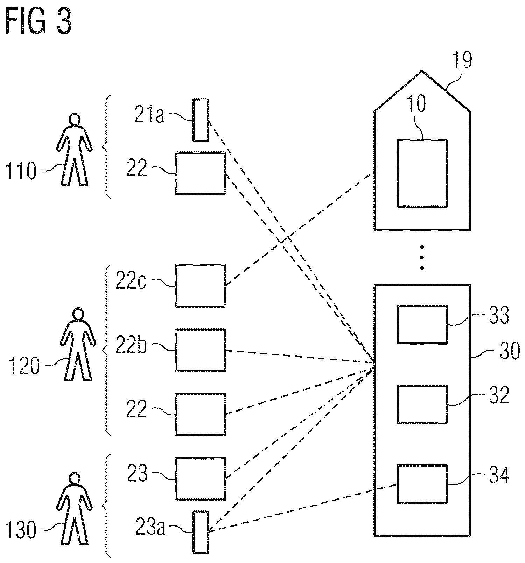

Figur 3 zeigt das System in einer erweiterten Ausführungsform. Im Wesentlichen entsprechen die dargestellten Elemente und ihre Funktionalitäten denen der zuvor beschriebenen Figur 2, sodass die dortigen Erläuterungen auch für diese Ausführungsform gelten.

Die in Figur 3 dargestellte Konfiguration unterscheidet sich jedoch dadurch, dass optional ein externes Verwaltungssystem 22b vorgesehen sein kann. Bei diesem externen Verwaltungssystem 22b kann es sich beispielsweise um ein Enterprise-Resource-Planning-System (ERP-System) handeln. Dieses externe Verwaltungssystem ist dazu ausgelegt, relevante Daten für den Betrieb und die Konfiguration der Hauskommunikationsanlage 10 bereitzustellen.

Insbesondere können hierüber Daten bereitgestellt werden, die für die Beschriftung einzelner Hauskommunikationsendgeräte, wie beispielsweise Ruftasten an Türstationen 11, verwendet werden. Die von dem externen Verwaltungssystem 22b bereitgestellten Daten können von der zentralen Verwaltungseinheit 30 empfangen und verarbeitet werden. Auf dieser Grundlage kann die zentrale Verwaltungseinheit 30 entweder automatisch Änderungen an der Beschriftung vornehmen oder dem Verwalter 120 entsprechende Vorschläge zur Bestätigung und Ausführung unterbreiten.

Die Anbindung eines derartigen externen Verwaltungssystems 22b stellt eine optionale Erweiterung des Systems dar und ist nicht zwingend erforderlich für den Betrieb der Hauskommunikationsanlage 10.

Darüber hinaus kann das in Figur 3 dargestellte System in einer erweiterten Ausführungsform auch ein Zugangsmanagement umfassen. Dieses kann vollständig über die zentrale Verwaltungseinheit 30 und insbesondere über die Verwaltungsplattform 33 durch den Verwalter 120 administriert werden. Voraussetzung hierfür ist, dass entsprechende Komponenten zur Erfassung von Authentifizierungsmerkmalen in die Hauskommunikationsanlage 10 integriert sind. Solche Komponenten können als separate Hauskommunikationsendgeräte ausgeführt oder in bestehende Hauskommunikationsendgeräte, wie beispielsweise die Türstation 11, integriert sein. Als Authentifizierungsmerkmale kommen beispielsweise eine PIN-Eingabe, biometrische Merkmale oder kontaktlose Identifikationsmittel wie RFID-Transponder in Betracht.

Alternativ oder ergänzend kann ein separates externes Zugangsmanagementsystem 22c vorgesehen sein, das über eine geeignete Datenverbindung mit der Hauskommunikationsanlage 10 gekoppelt ist. Über das externe Zugangsmanagementsystem 22c können Zugangsberechtigungen verwaltet und Authentifizierungsmerkmale geprüft werden, wobei das System 22c entweder eigenständig arbeitet oder mit der zentralen Verwaltungseinheit 30 zusammenwirkt.

Die Anbindung eines solchen externen Zugangsmanagementsystems 22c stellt ebenso wie die Anbindung des externen Verwaltungssystems 22b eine optionale Erweiterung des Systems dar und ist für den Grundbetrieb der Hauskommunikationsanlage 10 nicht zwingend erforderlich.

Gegebenenfalls kann auch der Nutzer 130 über eingeschränkte Möglichkeiten zur Anpassung des Zugangsmanagements verfügen. Insbesondere kann vorgesehen sein, dass der Nutzer 130 berechtigt ist, für den Zugang zu seinen zugeordneten Räumlichkeiten bestimmte Authentifizierungsmerkmale selbst zu verwalten. So kann der Nutzer 130 beispielsweise einen individuellen PIN-Code anlegen oder bestimmte RFID-Chips beziehungsweise -Karten autorisieren oder sperren. Diese Konfiguration kann der Nutzer 130 entweder über eine geeignete externe Komponente oder über die ihm zur Verfügung stehende mobile Anwendung auf dem mobilen Endgerät 23a vornehmen.

Die vorliegende Erfindung betrifft somit ein System zur Verwaltung einer Hauskommunikationsanlage 10, das insbesondere für den Einsatz in größeren Wohnanlagen oder Gebäudekomplexen ausgelegt ist. Die Hauskommunikationsanlage 10 umfasst eine Vielzahl von Hauskommunikationsendgeräten 11, 12, 13, beispielsweise Türstationen 11, Innenstationen 12 sowie Schaltaktoren 13 zur Ansteuerung von Türöffnern. Die Hauskommunikationsendgeräte 11, 12, 13 sind über ein IP-basiertes Datennetzwerk 15 miteinander verbunden, wobei auch Mischformen aus kabelgebundenen und kabellosen Verbindungen vorgesehen sind. Eine Energieversorgung kann dabei über das Datennetzwerk 15 mittels Power-over-Ethernet oder durch separate Leitungen erfolgen.

Kern der Erfindung ist die zentrale Verwaltungseinheit 30, die ein digitales Abbild 31 der Hauskommunikationsanlage 10 verwaltet. Jedes physische Hauskommunikationsendgerät 11, 12, 13 wird durch eine eindeutige Identifikation repräsentiert und im digitalen Abbild 31 registriert. Die zentrale Verwaltungseinheit 30 ist dazu ausgelegt, Betriebs- und Konfigurationsdaten mit den Hauskommunikationsendgeräten 11, 12, 13 zu synchronisieren sowie Kommunikationsverbindungen bereitzustellen, über die verschiedene Benutzerrollen auf die Konfigurations- und Verwaltungsfunktionen zugreifen können.

Zur Unterstützung des Betriebs sind unterschiedliche Benutzerrollen vorgesehen, darunter eine Installateurrolle für die Inbetriebnahme und spätere Wartung der Hauskommunikationsanlage 10, eine Verwalterrolle für die zentrale Administration und eine Nutzerrolle für individuelle Anpassungen. Für jede Rolle werden passende Benutzerschnittstellen bereitgestellt, die sowohl stationär als auch mobil erreichbar sind.

Die Erfassung der eindeutigen Identifikation der Hauskommunikationsendgeräte 11, 12, 13 erfolgt vorzugsweise durch den Installateur 110 über ein mobiles Endgerät 21a mit Installationsanwendung, beispielsweise durch Scannen eines maschinenlesbaren Codes. Auf dieser Basis kann die Konfiguration erstellt, angepasst und bei Bedarf auch bei einem Geräteaustausch aktualisiert werden.

Besonderes Augenmerk liegt auf der Möglichkeit zur automatisierten oder digitalen Beschriftung der Türstationen 11. Über die zentrale Verwaltungseinheit 30 kann eine digitale Anzeige direkt mit den korrekten Nutzerdaten beschriftet werden. Alternativ wird bei einer statischen Beschriftung automatisch ein Auftrag zur physischen Erstellung der neuen Beschriftung ausgelöst. Optional können dafür Daten aus einem externen Verwaltungssystem 22b, etwa einem Enterprise-Resource-Planning-System ERP, genutzt werden.

Zudem ist eine zentrale Speichereinheit 34 vorgesehen, in der Kommunikationsereignisse wie Bild- und Sprachdaten gespeichert werden. Der Zugriff auf diese Daten kann durch den Nutzer 130 über ein mobiles Endgerät 23a oder durch andere berechtigte Benutzerrollen erfolgen.

Eine Erweiterung der Erfindung umfasst die Integration von Komponenten zur Zutrittskontrolle, wobei Hauskommunikationsendgeräte 11, 12, 13 dazu ausgelegt sind, Authentifizierungsmerkmale zu erfassen und darüber die Zugangsberechtigung zu verwalten. Auch hier ist eine Verwaltung durch den Verwalter 120 oder optional durch den Nutzer 130 vorgesehen.

Die zentrale Verwaltungseinheit 30 gliedert sich in eine Verarbeitungseinheit 32 zur Synchronisation der Hauskommunikationsendgeräte 11, 12, 13 und eine Verwaltungsplattform 33 zur Bereitstellung der Administrationsoberflächen. Ergänzend ist vorgesehen, dass auch externe Systeme wie das externe Verwaltungssystem 22b oder ein separates System 22c für das Zutrittsmanagement angebunden werden können, um zusätzliche Informationen oder Funktionen bereitzustellen.

Insgesamt ermöglicht das System eine flexible und skalierbare Verwaltung von Hauskommunikationsanlagen 10, die sich insbesondere für größere Gebäudekomplexe eignet und sowohl zentrale als auch nutzerindividuelle Konfigurationen und Interaktionen unterstützt.

Somit betrifft die vorliegende Erfindung ein System zur Verwaltung einer Hauskommunikationsanlage mit einer Vielzahl von Hauskommunikationsendgeräten, die über ein Datennetzwerk verbunden sind, und einer zentralen Verwaltungseinheit. Die zentrale Verwaltungseinheit speichert und verwaltet ein digitales Abbild der Anlage mit eindeutig identifizierten Hauskommunikationsendgeräten und synchronisiert Betriebs- und Konfigurationsdaten. Über bereitgestellte Kommunikationsverbindungen können verschiedene Benutzerrollen auf Konfigurations- und Verwaltungsfunktionen zugreifen.

## Patentansprüche

1. System zur Verwaltung einer Hauskommunikationsanlage (10),
mit einer Mehrzahl von Hauskommunikationsendgeräten (11, 12, 13), die über ein Datennetzwerk (15) miteinander verbunden sind,
mit einer zentralen Verwaltungseinheit (30), die dazu ausgelegt ist, ein digitales Abbild (31) der Hauskommunikationsanlage (10) zu speichern und zu verwalten, wobei jedes physische Hauskommunikationsendgerät (11, 12, 13) durch eine eindeutige Identifikation im digitalen Abbild (31) registriert ist, wobei die zentrale Verwaltungseinheit (30) dazu ausgelegt ist,
- Betriebs- und Konfigurationsdaten aus dem digitalen Abbild (31) mit den korrespondierenden Hauskommunikationsendgeräten (11, 12, 13) zu synchronisieren, und
- Kommunikationsverbindungen bereitzustellen, über die Benutzer mittels Benutzeranwendungen und/oder Administrationsoberflächen auf die Konfigurations- und Verwaltungsfunktionen der Hauskommunikationsanlage (10) zugreifen können.

2. System nach Anspruch 1,
**dadurch gekennzeichnet,**
**dass** die Hauskommunikationsendgeräte (11, 12, 13) über ein IP-basiertes Datennetzwerk (15) miteinander verbunden sind, wobei die Hauskommunikationsanlage (10) dazu ausgelegt ist, über das IP-basierte Datennetzwerk (15) mit der zentralen Verwaltungseinheit (30) kommunikativ gekoppelt zu werden.

3. System nach einem der vorhergehenden Ansprüche,
**dadurch gekennzeichnet,**
**dass** jedes Hauskommunikationsendgerät (11, 12, 13) eine eindeutige Identifikation aufweist, wobei die zentrale Verwaltungseinheit (30) dazu ausgelegt ist, diese eindeutige Identifikation zu erfassen und die jeweiligen Hauskommunikationsendgeräte (11, 12, 13) im digitalen Abbild (31) der Hauskommunikationsanlage (10) zu registrieren.

4. System nach einem der vorhergehenden Ansprüche,
**dadurch gekennzeichnet,**
**dass** die zentrale Verwaltungseinheit (30) dazu ausgelegt ist, Benutzerrollen mit unterschiedlichen Berechtigungen für die Konfigurations- und Verwaltungsfunktionen der Hauskommunikationsanlage (10) zu verwalten.

5. System nach Anspruch 4,
**dadurch gekennzeichnet,**
**dass** die Benutzerrollen mindestens Folgendes umfassen:
- eine Installateurrolle, die zur Inbetriebnahme und Konfiguration der Hauskommunikationsanlage (10) berechtigt ist,
- eine Verwalterrolle, die zur Administration der Hauskommunikationsanlage (10) und zur Verwaltung der Benutzerrechte berechtigt ist, und/oder
- eine Nutzerrolle, die zur individuellen Anpassung nutzerspezifischer Parameter der Hauskommunikationsanlage (10) berechtigt ist.

6. System nach einem der vorhergehenden Ansprüche,
**dadurch gekennzeichnet,**
**dass** mindestens ein Hauskommunikationsendgerät (11), insbesondere eine Türstation (11), ein Anzeigeelement umfasst, das zur Darstellung von Beschriftungen, insbesondere Namen zugeordneter Nutzer, ausgelegt ist, wobei die zentrale Verwaltungseinheit (30) dazu ausgelegt ist,
- für eine digitale Anzeige die Beschriftung durch Übertragung von Konfigurationsdaten an das Hauskommunikationsendgerät (11) zu aktualisieren, und/oder
- für eine statische Beschriftung bei einer Änderung der Nutzerzuordnung automatisch einen Auftrag für eine neue Beschriftung zu generieren und bereitzustellen.

7. System nach Anspruch 6,
**dadurch gekennzeichnet,**
**dass** es ein externes Verwaltungssystem (22b) umfasst, welches dazu ausgelegt ist, nutzerspezifische und/oder einer Gebäudeeinheit zugeordnete Daten zu verwalten und bereitzustellen, wobei die zentrale Verwaltungseinheit (30) dazu ausgelegt ist,
- die aus dem externen Verwaltungssystem (22b) bereitgestellten Daten einer Ruftaste oder einem Anzeigeelement eines Hauskommunikationsendgeräts (11) zuzuordnen und für die Aktualisierung einer digitalen Anzeige zu verwenden, und/oder
- basierend auf den bereitgestellten Daten automatisch einen Auftrag für eine neue statische Beschriftung zu generieren und bereitzustellen.

8. System nach einem der vorhergehenden Ansprüche,
**dadurch gekennzeichnet,**
**dass** es eine zentrale Speichereinheit (34) umfasst, die dazu ausgelegt ist, mit der Hauskommunikationsanlage (10) gekoppelt zu werden und Kommunikationsereignisse, insbesondere Bilder und/oder Sprachnachrichten, von mindestens einem Hauskommunikationsendgerät (11, 12, 13) zu speichern, wobei die zentrale Speichereinheit (34) dazu ausgelegt ist, gespeicherte Kommunikationsereignisse an mindestens ein Hauskommunikationsendgerät (11, 12, 13) und/oder eine Benutzeranwendung bereitzustellen.

9. System nach einem der vorhergehenden Ansprüche,
**dadurch gekennzeichnet,**
**dass** die zentrale Verwaltungseinheit (30) eine Verarbeitungseinheit (32) zur Verwaltung und Synchronisation der Hauskommunikationsendgeräte (11, 12, 13) sowie eine Verwaltungsplattform (33) zur Bereitstellung von Administrationsoberflächen umfasst,
- wobei die Verarbeitungseinheit (32) dazu ausgelegt ist, das digitale Abbild (31) der Hauskommunikationsanlage (10) einschließlich der zugehörigen Hauskommunikationsendgeräte (11, 12, 13) zu verwalten und Betriebs- und Konfigurationsdaten aus dem digitalen Abbild (31) mit den Hauskommunikationsendgeräten (11, 12, 13) zu synchronisieren,
- und wobei die Verwaltungsplattform (33) dazu ausgelegt ist, Administrationsoberflächen bereitzustellen, über die Konfigurationsdaten erstellt und verwaltet werden.

10. System nach einem der vorhergehenden Ansprüche,
**dadurch gekennzeichnet,**
**dass** es mindestens ein erstes mobiles Endgerät (23a) umfasst, das eine Benutzeranwendung ausführt, wobei die Benutzeranwendung dazu ausgelegt ist,
- mit der zentralen Verwaltungseinheit (30) zu kommunizieren, um nutzerspezifische Einstellungen für die Hauskommunikationsanlage (10) zu verwalten,
- Kommunikationsereignisse aus der zentralen Speichereinheit (34) abzurufen, und/oder
- eine Ferninteraktion mit mindestens einem Hauskommunikationsendgerät (11, 12, 13) zu ermöglichen.

11. System nach einem der vorhergehenden Ansprüche,
**dadurch gekennzeichnet,**
**dass** es mindestens ein zweites mobiles Endgerät (21a) umfasst, das eine Installationsanwendung ausführt, wobei die Installationsanwendung dazu ausgelegt ist,
- direkt mit der Hauskommunikationsanlage (10) zu kommunizieren, um Hauskommunikationsendgeräte (11, 12, 13) zu identifizieren, eine Konfiguration der identifizierten Hauskommunikationsendgeräte (11, 12, 13) zu erstellen und die erstellte Konfiguration an die Hauskommunikationsendgeräte (11, 12, 13) der Hauskommunikationsanlage (10) zu übertragen, und/oder
- Konfigurationsdaten aus der zentralen Verwaltungseinheit (30) abzurufen, die abgerufenen Konfigurationsdaten zu bearbeiten und/oder bearbeitete Konfigurationsdaten zur weiteren Nutzung oder zur Übertragung an die Hauskommunikationsanlage (10) an die zentrale Verwaltungseinheit (30) zu übertragen.

12. System nach einem der vorhergehenden Ansprüche,
**dadurch gekennzeichnet,**
**dass** die Hauskommunikationsanlage (10) mindestens ein Hauskommunikationsendgerät (11, 12, 13) umfasst, das dazu ausgelegt ist, ein Authentifizierungsmerkmal zu erfassen, wobei die zentrale Verwaltungseinheit (30) dazu ausgelegt ist,
- Zugangsberechtigungen unter Verwendung des erfassten Authentifizierungsmerkmals zu verwalten und bestimmten Nutzern zuzuweisen, und
- Berechtigungsänderungen an das Hauskommunikationsendgerät (11, 12, 13) zu übertragen, sodass dieses unter Verwendung des erfassten Authentifizierungsmerkmals eine Zugangsberechtigung freigeben kann.

13. Hauskommunikationsanlage (10), umfassend eine Mehrzahl von Hauskommunikationsendgeräten (11, 12, 13), die über ein IP-basiertes Datennetzwerk (15) miteinander verbunden sind, wobei die Hauskommunikationsanlage (10) dazu ausgelegt ist, über das IP-basierte Datennetzwerk (15) mit einer zentralen Verwaltungseinheit (30) gekoppelt zu werden, um Betriebs- und Konfigurationsdaten auszutauschen.

14. Zentrale Verwaltungseinheit (30) für eine Hauskommunikationsanlage (10), umfassend eine Verarbeitungseinheit (32) zur Verwaltung eines digitalen Abbilds (31) der Hauskommunikationsanlage (10), wobei das digitale Abbild (31) eine Repräsentation der eindeutig identifizierten Hauskommunikationsendgeräte (11, 12, 13) umfasst, wobei die zentrale Verwaltungseinheit (30) dazu ausgelegt ist, Betriebs- und Konfigurationsdaten aus dem digitalen Abbild (31) mit den Hauskommunikationsendgeräten (11, 12, 13) zu synchronisieren, und
Administrationsoberflächen und/oder Benutzeranwendungen bereitzustellen, über die verschiedene Benutzer auf die Konfigurations- und Verwaltungsfunktionen der Hauskommunikationsanlage (10) zugreifen können.

15. Zentrale Verwaltungseinheit (30) nach Anspruch 14,
**gekennzeichnet durch**
eine zentrale Speichereinheit (34), die dazu ausgelegt ist, mit der Hauskommunikationsanlage (10) gekoppelt zu werden und Kommunikationsereignisse, insbesondere Bilder und/oder Sprachnachrichten, von mindestens einem Hauskommunikationsendgerät (11, 12, 13) zu speichern, wobei die zentrale Verwaltungseinheit (30) dazu ausgelegt ist, auf Kommunikationsereignisse aus der zentralen Speichereinheit (34) zuzugreifen und diese zur Anzeige an mindestens ein Hauskommunikationsendgerät (11, 12, 13) und/oder eine Benutzeranwendung weiterzuleiten.
